**Europäisches Patentamt**

**European Patent Office**

**Office européen des brevets**

(11) Veröffentlichungsnummer: **0 269 723 B1**

# EUROPÄISCHE PATENTSCHRIFT

(45) Veröffentlichungstag der Patentschrift: **31.03.93**

(21) Anmeldenummer: **87904246.3**

(22) Anmeldetag: **05.06.87**

(86) Internationale Anmeldenummer:
**PCT/EP87/00297**

(87) Internationale Veröffentlichungsnummer:
**WO 87/07770 (17.12.87 87/28)**

(51) Int. Cl.⁵: **H01Q 1/32,** H04B 7/08

(54) **DIVERSITY-ANTENNENANORDNUNG.**

(30) Priorität: **12.06.86 DE 3618452**

(43) Veröffentlichungstag der Anmeldung:
**08.06.88 Patentblatt 88/23**

(45) Bekanntmachung des Hinweises auf die
Patenterteilung:
**31.03.93 Patentblatt 93/13**

(84) Benannte Vertragsstaaten:
**DE FR GB IT NL SE**

(56) Entgegenhaltungen:
**EP-A- 0 065 263**
**EP-A- 0 197 650**

**Patent Abstracts of Japan,volume 9,No 298
(E-361) (2021),26 November1985,see the
whole abstract and the figure & JP,A
60136435**

**Patent Abstracts of Japan,volume 7,No 162
(E-187) (1307),15 July 1983,see the whole
abstract and the figure & JP,A,5870641**

**Patent Abstracts of Japan,volume 6,No 37
(E-97) (915),6 March 1982,see the whole abstract and the figure & JP,A,56157138**

(73) Patentinhaber: **HANS KOLBE & CO.
Bodenburger Strasse
W-3202 Bad Salzdetfurth(DE)**

(72) Erfinder: **LINDENMEIER, Heinz
Fürstenriederstr. 7
W-8033 Planegg(DE)**
Erfinder: **FLACHENECKER, Gerhard
Bozenerstrasse 2
W-8012 Ottobrunn(DE)**
Erfinder: **HOPF, Jochen
Salmdorfstrasse 3a
W-8013 Haar(DE)**
Erfinder: **REITER, Leopold
Ludwig-Thomastra e 9
W-8031 Gilching(DE)**

EP 0 269 723 B1

## Beschreibung

Die Erfindung bezieht sich auf eine Diversityantennen-Anordnung gemäß dem Oberbegriff des Anspruches 1. Solche Diversityantennen-Anordnungen werden verwendet für den Empfang frequenzmodulierter Signale vorzugsweise des Meterwellenbereichs und sind aus der Druckschrift EP-A1-0065 263 bekannt.

Für Antennendiversitysysteme, die eine deutliche Verbesserung des UKW-Empfangs im Kraftfahrzeug ermöglichen, sind mindestens zwei Antennen erforderlich.

Unter fahrzeugspezifischen Gesichtspunkten sind diese Antennen vorzugsweise so zu gestalten, daß sie in die Fahrzeugkarosserie integriert sind, was optimal in der Form von Scheibenantennen erfolgt. Neben der Frontscheibe, die aber in vielen Fahrzeugen wegen des dort vorhandenen hohen Störpegels durch die im Frontbereich der Fahrzeuge angeordneten Aggregate für die Realisierung von Antennen ausscheidet, ist die Fahrzeugheckscheibe geeignet zur Realisierung von Fahrzeugantennen.

Die Realisierung von Fahrzeugantennen in der Heckscheibe muß auf das dort vorhandene Heizfeld Rücksicht nehmen, dessen Ausführung und Abmessungen unter fahrzeugspezifischen und stylistischen Gesichtspunkten vorgegeben sind.

Eine Anordnung für zwei Antennen in der Fahrzeugheckscheibe für die Anwendung in Diversitysystemen wird in EP 0065263 vorgeschlagen. Bei dieser Anordnung wird im von Heizfeld nicht bedeckten Bereich der Scheibe eine Hauptantenne eingebaut, das Signal der zweiten Antenne wird in geeigneter Weise am untersten Heizleiter des Heizfeldes abgegriffen.

Eine derartige Anordnung weist mehrere Nachteile auf: eine Realisierung in Scheiben, bei denen die gesamte Glasfläche vom Heizfeld bedeckt ist, ist unmöglich; der zusätzliche Druck für die Hauptantenne ist unter fahrzeugspezifischen Gründen unerwünscht; die Empfangseigenschaften der Hauptantenne bei zirkular oder vertikal polarisierten UKW-Signalen ist unbefriedigend, da in der Praxis die vertikalen Abmessungen des vom Heizfeld nicht bedeckten Streifens auf der Scheibe gering sind.

Die Realisierung zweier Antennen in einer Fahrzeugscheibe wird ebenfalls in DE 3220279 vorgeschlagen. Kennzeichnend für diese Anordnung ist der Abgriff mehrerer Antennensignale in geringer räumlicher Entfernung.

Eine derartige Anordnung liefert zwar in Gebieten mit geringen Laufzeitenunterschieden der beteiligten Wellen und demzufolge geringen Mehrwegeverzerrungen gute Ergebnisse im Diversitysystem. In Bereichen mit größeren Signalumwegen und demzufolge großen Laufzeitunterschieden, wie z.B. im Gebirge, weist eine derartige Anordnung jedoch erhebliche Nachteile auf im Vergleich zu zwei Einzelantennen mit einem räumlichen Versatz der Auskoppelpunkte. Der Empfang zirkular oder vertikal polarisierter Signale mit einer Anordnung nach DE 3220279 ist aus den oben beschriebenen Gründen ebenfalls unbefriedigend.

Der Erfindung liegt die Aufgabe zu Grunde, ein Heizfeld mit vorgegebener Form als Antennen-Diversitysystem mit mindestens zwei Antennen auszubilden, wobei die mittlere Empfangsqualität mit jeder Einzelantenne möglichst gut ist und die Anzahl der Störungen, die in den Signalen der Einzelantennen während der Fahrt gleichzeitig auftreten, möglichst gering ist.

Diese Aufgabe wird erfindungsgemäß bei einer Diversityantennen-Anordnung der eingangs genannten Art durch die kennzeichnenden Merkmale des Anspruches 1 gelöst. Eine HF-mäßige Entkopplung im Sinne des Anspruches 1 liegt vor, wenn die Empfangssignale, insbesondere im Hinblick auf Empfangsstörungen, wie z.B. Einbrüche des HF-Pegels, unterschiedlich sind.

Erfindungsgemäße Ausführungsbeispiele sind in den angegebenen Zeichnungen dargestellt und werden im folgenden näher beschrieben. Im einzelnen zeigt:

Fig.1: Diversityantennen nach der Erfindung mit mittig unterteiltem Heizfeld, zwei diagonal angeordneten Anschlußpunkten, Diversity-Schalteinheit und Empfänger.

Fig.2: Ausführung der weiterführenden Netzwerke im Falle aktiver Antennen.

Fig.3: Pegelverläufe zweier Antennen während der Fahrt.

Fig.4: Annäherung der Verläufe durch zwei gegeneinander verschobenen Kurven der Charakteristik:

$$U(x) = U_{max} * \sqrt{(\sin \beta x)^2 + (m * \cos \beta x)^2}$$

und resultierende Verläufe der Störungen der Einzelantennen und eines Diversitysystems

Fig.5: Vorteilhafte Ausführungsform der Zuführungsnetzwerke

Fig.6: Impedanzverlauf der Quellimpedanz ohne und mit geeigneter Belastung durch das Zuführungsnetzwerk

Fig.7: Vorteilhaftes Ausführungsbeispiel von zwei Diversityantennen nach der Erfindung mit einem Satz von 6 Zuführungsnetzwerken zur Minimierung der Empfangsstörungen in den Pegeleinbrüchen

Fig.8: Diversityantennen nach der Erfindung mit ungeteiltem Heizfeld und zwei diagonal angeordneten Anschlußpunkten.

Fig.9: Diversityantennen nach der Erfindung mit mittig unterteiltem Heizfeld und zwei Anschlußpunkten auf der gleichen Seite der Scheibe

Fig.10: Diversityantennen nach der Erfindung mit ungeteiltem Heizfeld und zwei auf den beiden Sammelschienen oben angeordneten Anschlußpunkten.

Fig.11: Diversityantennen nach der Erfindung mit dreifach unterteiltem Heizfeld und zwei Anschlußpunkten jeweils an den äußeren Teilheizfeldern und einem mittleren Teilheizfeld.

Fig.12: Diversityantennen nach der Erfindung mit vierfach unterteiltem Heizfeld und jeweils einem Anschlußpunkt an einem der Teilheizfelder

Fig.13: Diversityantennen nach der Erfindung mit mittig unterteiltem Heizfeld und vier Anschlußpunkten jeweils an den Enden der Sammelschienen

Die Erfindung geht von der heute üblichen Ausführung von Fahrzeugheckscheiben mit auf die Glasoberfläche aufgedrucktem Heizfeld oder zwischen die Einzelscheiben von Verbundglas eingelegten Drähten aus. Diese Drähte sind üblicherweise horizontal angeordnet mit jeweils einer Sammelschiene an der rechten und linken Scheibenseite. Derartige Heizfelder sind bekanntermaßen gut als Empfangsstruktur für eine Einzelantenne geeignet, wobei in der Regel eine Ausführung als aktive Antenne erforderlich ist, wenn zur Standardstabantenne äquivalente Empfangsleistungen erreicht werden sollen. Im folgenden werden Antennen nach der Erfindung am Beispiel der Ausführung mit aufgedruckten Leitern erläutert, Ausführungen mit eingelegten Drähten sind sinngemäß auszuführen.

Die Erfindung beruht darauf, für die Realisierung der zwei oder mehr Antennen in der Heckscheibe das in der Fahrzeugheckscheibe vorhandene Heizfeld vom Design her grundsätzlich unverändert zu lassen, d.h. keine zusätzlichen Leiter aufzudrucken, und das erforderliche unterschiedliche Verhalten der Einzelantennen im Hinblick auf die Empfangseinbrüche auf andere Weise zu erreichen, wie dies im folgenden beschrieben wird. Der Betrachtung der Empfangseinbrüche kommt dabei entscheidende Bedeutung zu, da diese neben Aufrauschen im Empfangssystem speziell beim mobilen Empfang frequenzmodulierter Signale zwangsweise zu Verzerrungen des demodulierten Signals führen, die im Empfangssystem nicht mehr beseitigt werden können.

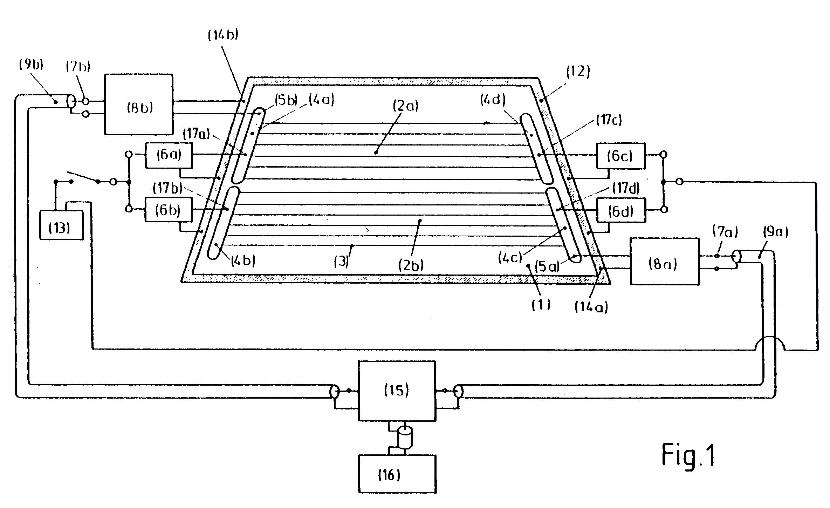

Fig.1 zeigt die prinzipielle Anordnung von zwei Antennen nach der Erfindung für Diversityanwendungen im UKW-Bereich. Auf der Heckscheibe 1, die vom elektrisch gut leitfähigen Rahmen 12 umgeben ist, ist das Heizfeld 2 aufgedruckt. Im Beispiel der Fig.1 ist dieses Heizfeld in zwei Teilheizfelder 2a und 2b dadurch unterteilt, daß die Sammelschienen 4 ungefähr in der Mitte unterbrochen sind und die Zuführung der Heizgleichströme zu den insgesamt vier Sammelschienen 4a bis 4d über die vier Zuführungsnetzwerke 6a bis 6d erfolgt. 3 bezeichnet die Heizleiter. An zwei geeignet gewählten Punkten auf den Sammelschienen, im Beispiel der Fig.1 am linken oberen Ende der linken und am rechten unteren Ende der rechten Sammelschiene, sind Anschlußpunkte 5a und 5b angebracht, an denen die empfangenen Signale abgegriffen werden. Über Anschlußnetzwerke 8a und 8b werden die empfangenen Signale an die Antennenanschlußstellen 7a und 7b und an die koaxialen Verbindungsleitungen 9a und 9b, die zur Diversity-Schalteinheit 15 führen, weitergegeben. Die Diversityschalteinheit schaltet die Antenne mit dem aktuell besten Signal zum Empfänger 16 durch.

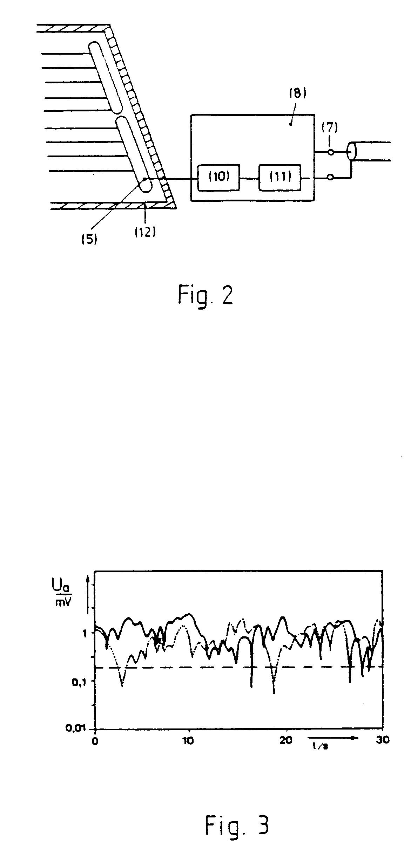

Die Anschlußnetzwerke 8 bestehen im Fall der Ausführung der Antennen als passive Antennen aus Blindelementen, die innerhalb des Nutzfrequenzbereichs eine Impedanzanpassung an den Wellenwiderstand der verwendeten Koaxialkabel bewirken. Im Falle der Ausführung als aktive Antennen (Fig.2) ist jeweils zwischen die aktive Schaltung 11 und den jeweiligen Anschlußpunkt 5 ein Netzwerk 10 zwischengeschaltet, das zusammen mit dem aktiven Element an der Antennenanschlußstelle 7 innerhalb des Nutzbandes einen möglichst guten Signal-Rauschabstand bewirkt.

Mit Hilfe der Zuführungsnetzwerke 6a bis 6d, über die der Heizgleichstrom zugeführt wird, wird bei Diversityantennen nach der Erfindung die wechselstrommäßige Belastung der Sammelschienen innerhalb des Nutzfrequenzbereichs geeignet und definiert eingestellt. Die wechselstrommäßige Belastung der Sammelschienen durch die Zuführungsnetzwerke 6 beeinflusst dabei, zusammen mit der Wahl der Anschlußpunkte, das Empfangsverhalten der Einzelantennen und das Ausmaß der Unterschiede im Empfangsverhalten bezüglich der Empfangseinbrüche. Daher muß die wechselstrommäßige Belastung der Sammelschienen durch die Zuführungsnetzwerke 6 für eine möglichst gute Funktion des Diversitysystems geeignet gewählt werden.

Um die Eignung zweier Antennen für Diversityanwendungen festzustellen, wird nach dem Stand der Technik der Korrelationsfaktor zwischen dem Signalverhalten der betrachteten Antennen während der Fahrt /Andersen/ oder die Unterschiedlichkeit der Richtdiagramme, die im Meßfeld ermittelt werden /Bossert/, angesehen. Wendet man diese Kriterien auf Diversityantennen nach der Erfindung an, so zeigt sich, daß der Korrelationsfaktor zwischen den Signalen bei derartigen Antennen typisch deutlich über +0.5 liegt und daß die Richtdiagramme derartiger Antennen sich vom grundsätzlichen her ebenfalls nicht in einer Weise, wie in /Bossert/ dargestellt, unterscheiden. Trotzdem sind mit Diversityantennen nach der Erfindung im Diversitysystem beträchtliche Verbesserungen des Empfangsverhaltens erreichbar.

Die Ursache hierfür liegt in der Tatsache begründet, daß zur Berechnung des Korrelationsfaktors die gesamte Meßzeit herangezogen wird. Für die erreichbare Verbesserung des Empfangs durch ein Diversitysystem entscheiden hingegen nur sehr kurze Zeiträume, nämlich die Zeiträume, innerhalb deren eine Empfangsstörung auf einer der Antennen vorliegt. Typische Pegelverläufe während der Fahrt für zwei Antennen nach der Erfindung, die entsprechend Fig.1 realisiert wurde, zeigt Fig.3. Störungen treten in der Praxis nur während der Pegeleinbrüche auf. Dies gilt gleichermaßen für alle bekannten Empfangsstörungen des frequenzmodulierten Rundfunks im Meterwellenbereich wie Aufrauschen, Mehrwegeverzerrungen, Nachbarkanal- und Gleichkanalstörungen und Intermodulation.

Die Ursachen für die Pegeleinbrüche und die damit einhergehenden Empfangsstörungen liegen bekanntlich in der vektoriellen Addition der Teilwellen des zu empfangenen Rundfunksenders am Empfangsort, die sich mit unterschiedlichen Amplituden, Phasenlagen und Laufzeiten überlagern. Auch wenn der mittlere Empfangspegel des Nutzsignals deutlich über dem Eigenrauschpegel des Empfangssystems bzw. über dem mittleren Störpegel von Nachbar- oder Gleichkanalsignalen liegt, taucht auf Grund des Pegelhubs des Nutzsignals von typisch 20 bis 30 dB auf wenige Meter Fahrtstrecke dieses in der Praxis häufig unter den aktuell vorhandenen Störpegel ein mit der Folge erheblicher Empfangsstörungen.

Im Falle von größeren Laufzeitunterschieden der beteiligten Teilwellen des Nutzsignals ergeben sich zusätzlich noch Mehrwegeempfangsverzerrungen, weil die Momentanfrequenz dieser einzelnen Teilwellen unterschiedlich ist mit der Folge von Störfrequenzhubspitzen, die Spektralanteile beeinhalten, die ursprünglich nicht im Modulationssignal vorhanden waren. Diese Störungen treten ebenfalls nur in den Pegeleinbrüchen auf.

Einen typischen Ausschnitt der Pegelverläufe zweier Antennen nach der Erfindung zeigt Fig.3 . Die zusätzlich eingezeichnete Linie bei -14 dB mV kennzeichnet einen Pegel, unterhalb dessen ein geforderter Signal-Störabstand unterschritten ist. Man sieht, daß dieser Pegel nie gleichzeitig von beiden Antennen unterschritten wird.

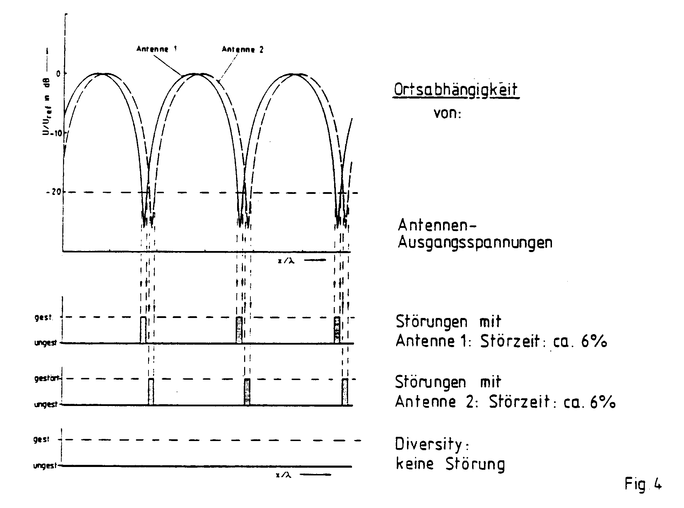

Die bei einer Meßfahrt gewonnenen Pegelverläufe sind in Fig. 4 durch zwei Signalverläufe angenähert, deren Charakteristik durch die Funktion:

$$U(x) = Umax^* \sqrt{(\sin \beta x)^2 + (m * \cos \beta x)^2}$$

beschrieben ist. Dieser Spannungsverlauf ergibt sich entsprechend /Meinke I/ für den Spannungsverlauf auf einer fehlangepassten Leitung, wobei m der Anpassungsfaktor ist. Ein derartiger Verlauf kommt in der Praxis auch in einem Wellenfeld zustande, wenn sich einer ebenen Welle, die sich in einer Richtung "x" ausbreitet, eine Welle der gleichen Frequenz mit entgegengesetzter Ausbreitungsrichtung überlagert, also z.B. im Falle einer Reflexion an einer leitenden Fläche mit Verlusten. Bewegt sich ein Fahrzeug, auf dem zwei Antennen mit räumlichem Versatz montiert sind, in diesem resultierenden Wellenfeld, so ergibt sich für die Ausgangsspannung der beiden Antennen grundsätzlich der gezeichnete Verlauf.

Für eine räumliche Verschiebung der beiden Antennen von nur 1/24 der Wellenlänge entsprechend 15 Grad, wie in Fig.4 dargestellt, beträgt der Korrelationsfaktor der beiden Signale bei einem Pegelhub von 26 dB etwa 0.84, was nach herkömmlicher Ansicht keinerlei Eignung für Diversity bedeutet. Eine Betrachtung der Zeitabschnitte, in denen eine Empfangsstörung auftritt, zeigt hingegen, daß beide Antennen zu unterschiedlichen Zeiten gestört sind, wodurch durch ein Diversitysystem keine Empfangsstörungen mehr vorhanden sind.

Die Anwendung von Meßverfahren, die die Wahrscheinlichkeit der Gleichzeitigkeit der Empfangsstörungen während der Fahrt mit verschiedenen Antennen erfassen, zeigt, daß Antennen nach der Erfindung sehr wohl vorteilhaft innerhalb von Antennendiversitysystemen eingesetzt werden können.

Zur Optimierung der Wahl der Anschlußpunkte und der Ausführung der Zuführungsnetzwerke 6 ist daher ein mobiler Meßaufbau mit einem Meßempfänger erforderlich, der während einer Testfahrt die Modulationsverzerrungen mit den jeweils zeitsynchron zu untersuchenden Antennen registriert und einer Auswertung zugänglich macht. Anhand derartiger Aufzeichnungen kann die Effizienz der jeweiligen Antennen im Hinblick auf Diversityanwendungen festgestellt und optimiert werden.

Derartige Untersuchungen sind zeitaufwendig, da für eine Vielzahl von Konfigurationen von Anschlußpunkten 5 und Zuführungsnetzwerken 6 nach der Erfindung jeweils längere Testfahrten erforderlich sind.

Es zeigt sich jedoch, daß die Optimierung von Antennen nach der Erfindung in verschiedenen Fahrzeugen nicht zu jeweils grundsätzlich verschiedenen Konfigurationen bezüglich der Anschlußpunkte 5 und der Zuführungsnetzwerke 6 führt, sondern daß bei Fahrzeugheckscheiben heutiger Bauart in der Regel zumindest eine der in den Unteransprüchen beschriebenen und im folgenden näher erläuterten vorteilhaften Ausgestaltungen der Erfindung zu sehr guten Diversityantennen führt.

Im Interesse einer möglichst geringen Wahrscheinlichkeit des gleichzeitigen Auftretens von Empfangsstörungen auf den beiden Diversityantennen, also im Interesse einer möglichst hohen Diversityeignung, ist es in der Regel günstig, die Anschlusspunkte 5a und 5b an möglichst weit voneinander entfernten Punkten auf den Sammelschienen anzubringen und gleichzeitig das Heizfeld in zwei Teilheizfelder 2a und 2b aufzuteilen, von denen das eine als Empfangsstruktur für die eine Antenne und die andere als Empfangsstruktur für die andere Antenne verwendet wird. Diese in Fig.1 dargestellte Anordnung liefert in der Regel sowohl bei Fahrzeugen mit großen als auch mit kleinen Heckscheiben und sowohl mit kleinen als auch mit großen Heizflächen sehr gute Ergebnisse im Diversitysystem, wenn jeweils entsprechend der Erfindung die Zuführungsnetzwerke 6a bis 6d geeignet gewählt werden.

Für die Wahl der jeweiligen Impedanz, mit der die Zuführungsnetzwerke 6a bis 6d die jeweilige Teilsammelschiene 4a bis 4d am jeweiligen Anschlußpunkt innerhalb des Nutzfrequenzbereichs belasten, können weitere Empfehlungen gegeben werden.

Dabei ist zu unterscheiden, ob es sich um ein Zuführungsnetzwerk handelt, das an einer Teilsammelschiene angeschlossen ist, an der auch ein Anschlußpunkt für ein weiterführendes Netzwerk angebracht ist, wie im Falle der Zuführungsnetzwerke 6a und 6d und der Anschlusstellen 5b und 5a auf den Sammelschienen 4a und 4c, oder ob es sich um ein Zuführungsnetzwerk handelt, das an eine der beiden anderen Teilsammelschienen angeschlossen ist, wie dies für die Zuführungsnetzwerke 6b und 6c und den Sammelschienen 4b und 4d gilt.

Auf Grund der flächigen Erregung der Antennenstrukturen ist es möglich, durch die Belastung der Sammelschienen 4b und 4d durch die Zuführungsnetzwerke 6b und 6c die Art und Weise zu beeinflussen, in der sich die differentiellen Einzelerregungen bezüglich des jeweiligen Anschlußpunktes 5b und 5a überlagern. Diese Tatsache ist daher der Grund für die Möglichkeit, die Unterschiedlichkeit des Empfangsverhaltens beider Antennen durch diese Zuführungsnetzwerke zu beeinflussen. Zusätzlich hängt die Quellimpedanz am jeweiligen Anschlußpunkt 5a und 5b von der wechselstrommäßigen Belastung der jeweils anderen Teilsammelschiene stark ab, da in der Regel zwischen den beiden Teilsammelschienen jeweils eines Teilheizfeldes wegen der Heizleiter, die die Teilsammelschienen verbinden, eine starke Impedanzverkopplung besteht.

Für Antennen nach der Erfindung ist daher die wechselstrommäßige Belastung der Teilsammelschienen, an denen die Anschlußpunkte 5a bzw. 5b nicht angebracht sind, von entscheidender Bedeutung. Neben den einfachsten Realisierungsformen der Zuführungsnetzwerke 6b und 6c mit wechselstrommäßigem Leerlauf oder wechselstrommäßigem Kurzschluß sind grundsätzlich ebenfalls niederohmig oder hochohmig induktive oder kapazitive Belastungen zu untersuchen, um das gewünschte Verhalten zu erreichen. Weitere Hinweise zur Dimensionierung dieser Zuführungsnetzwerke 6b und 6c werden unten gegeben.

Andere physikalische Gegebenheiten und Dimensionierungsgesichtspunkte gelten für die Zuführungsnetzwerke 6a bzw. 6d, die an die Teilsammelschienen mit den Anschlußpunkten 5a bzw. 5b angeschlossen sind. Der Einfluss der wechselstrommäßigen Belastung der Teilsammelschienen auf die Art und Weise der Überlagerung der differentiellen Erregungen des jeweiligen Teilheizfeldes ist hier sehr gering, da die Belastung an der gleichen Teilsammelschiene und daher in der Nähe der Anschlußpunkte 5a bzw. erfolgt. Die Teilsammelschienen stellen ja eine niederohmige wechselstrommäßige Verbindung unmittelbar am Scheibenrand dar, in die keine Empfangssignale von Bedeutung einkoppeln können.

Schließt man im Grenzfall das Zuführungsnetzwerk 6a bzw. 6d direkt an den Anschlußpunkten 5a bzw. 5b der weiterführenden Netzwerke an, was insofern ein vorteilhafte Weiterführung der Erfindung ist, als dadurch die Zahl der Anschlußstellen auf den Sammelschienen geringer ist mit dem Vorteil einer einhergehenden Kostenreduktion, so besteht der Einfluss dieser wechselstrommäßigen Belastung nun ausschließlich gegebenenfalls in eine Transformation der Quellimpedanz der Antennenstruktur.

In der Regel wird man daher die Zuführungsnetzwerke 6a und 6d so ausführen, daß sie nur eine vernachlässigbare wechselstrommäßige Belastung bezüglich der Anschlußpunkte 5a bzw. 5b darstellen. Dies kann durch eine hochohmige Verdrosselung der Heizstromzuführungen erfolgen, wobei jedoch wegen der hohen Heizströme von bis zu 30A für das gesamte Heizfeld, also von bis zu 15A pro Teilheizfeld, auf Grund der ohmschen Verluste der Drossel entweder ein unerwünscht hoher Teil der Heizleistung als Verlustleistung in der Drossel freigesetzt wird oder die mechanischen Abmessungen der Drossel unzulässig groß werden.

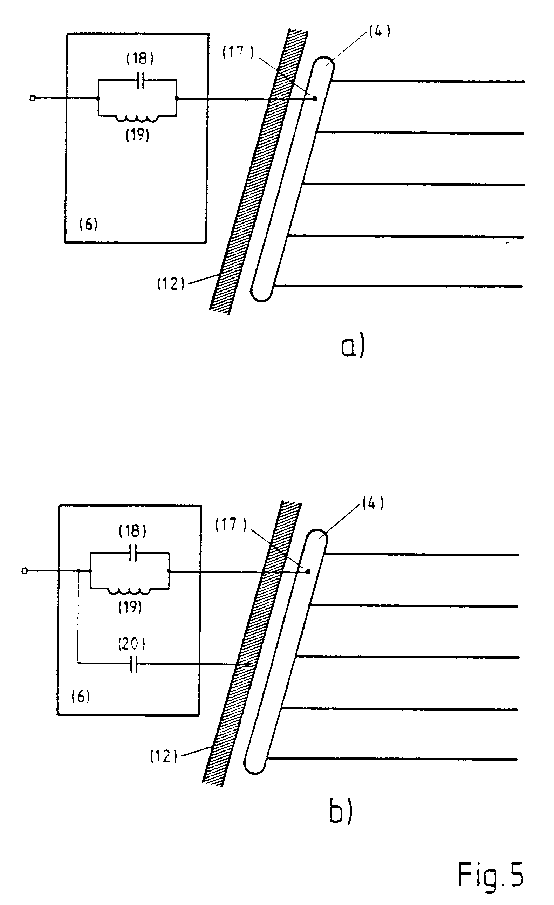

Wesentlich einfacher und vorteilhafter ist daher eine Realisierung in Form eines Parallelresonanzkreises, wie dies in Fig.5 dargestellt ist, dessen Resonanzfrequenz innerhalb des UKW-Bereichs gewählt ist. Auf Grund der Resonanzüberhöhung des Betrags der Impedanz kann in diesem Fall die Induktivität minimal gewählt werden mit der Folge sehr geringer Verlustleistungen in der Spule und gleichzeitig geringen Abmessungen. Die erforderliche Hochohmigkeit des Resonanzkreises hängt von der Hochohmigkeit der Quellimpedanz der Antennenstruktur ab. In der Praxis liegt die Kapazität des parallel geschalteten Kondensators im Bereich 5 bis 25 pF, wodurch die wechselstrommäßige Belastung innerhalb des UKW-Bereichs von 87 bis 108 MHz nie geringer als 1450 Ohm bzw. 290 Ohm wird und die Induktivität nur Werte von 0.1 bzw. 0.5uH besitzt.

Häufig sind dem Heizgleichstrom auf Grund der Fahrzeugaggregate hochfrequente Störströme überlagert, die das Empfangsystem beeinträchtigen, wenn die Störungen Spektralanteile im UKW-Band beeinhalten. Eine Ergänzung der Zuführungsnetzwerke um einen Siebkondensator (20), der von der der Sammelschiene abgewandten Seite des Resonanzkreises als Abblockkondensator gegen die Fahrzeugkarosserie, alo nach Masse geschaltet ist, ist in der Regel ausreichend, um diese Störungen in dem notwendigen Maß zu verringern.

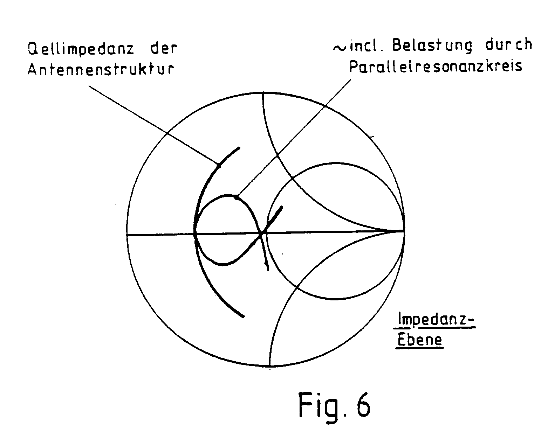

Durch einen derartigen Kondensator (20), der zu definierten Impedanzverhältnissen auf der der Sammelschiene abgewandten Seite des Resonanzkreises führt, kann in einer weiteren vorteilhaften Ausgestaltung der Erfindung der Resonanzkreis aus den Elementen (18) und (19) noch niederohmiger und damit verlustärmer aufgebaut werden, wenn eine wechselstrommäßige Belastung der Sammelschiene mit dem Charakter der Parallelresonanz bezüglich der Anschlußpunkte 5a bzw. 5b erwünscht ist, um im weiterführenden Netzwerk 8a bzw. 8b die geeigneten Transformations- und gegebenenfalls geeigneten Verstärkereigenschaften zu erreichen. Dieser Fall liegt in der Regel dann vor, wenn die Quellimpedanz der Antennenstruktur den Charakter eines Serienreonanzkreises aufweist (Fig.6), so daß die Belastung dieser Impedanz mit einem parallelgeschalteten Parallelresonanzkreis der gleichen Resonanzfrequenz einer Breitbandtransformation entspricht. Auf diese Weise vereinfacht sich gegebenenfalls das weiterführende Netzwerk 8a bzw. 8b.

Die Realisierung der Netzwerke 6b und 6c erfolgt einfach und vorteilhaft ebenfalls mit der Grundschaltung nach Fig.5b, mit der beliebige niederohmig oder hochohmig induktive oder kapazitive Belastungen der Sammelschienen 4b und 4d eingestellt werden können, wenn die Elemente (18) und (19) geeignet gewählt werden.

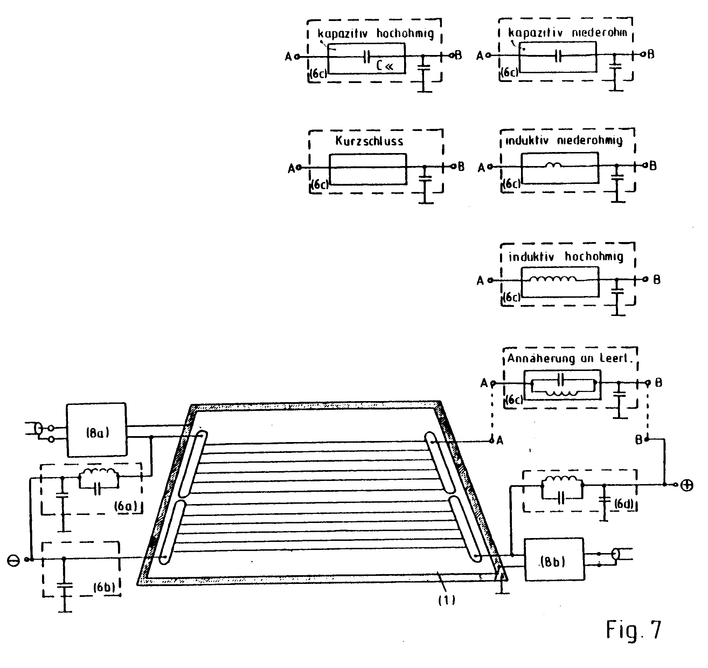

Für niederohmig induktive Belastungen entfällt vorteilhafterweise der Kondensator (18), in Falle niederohmig kapazitiver Belastung kann hingegen wegen des erforderlichen Gleichstromdurchgangs nicht auf die Induktivität (19) verzichtet werden. Um einen Wechselstromkurzschluß zu realisieren, können die Elemente (18) und (19) durch eine direkte Verbindung zwischen der Anschlußstelle des Zuführungsnetzwerks auf der Teilsammenschiene und dem Sieb- und Abblockkondensator (20) ersetzt werden. Zur Realisierung eines Wechselstromleerlaufs sind die oben erläuterten Gesichtspunkte für die Ausführung der Zuführungsnetzwerke 6a und 6d anzuwenden. Bei der Ermittlung der optimalen wechselstrommäßigen Belastung der Teilsammelschienen 4b und 4d kann man in der Regel eins der beiden Zuführungsnetzwerke 6b und 6c in seiner Belastung vorgeben, z.B. indem man, der besonders einfachen Realisierung wegen, einen Wechselstromkurzschluß wählt. So ist im Beispiel der Fig.7 die Teilsammelschiene 4b kapazitiv geerdet und die Teilsammelschienen. 4a und 4c mit den Anschlußpunkten 5a und 5b sind wegen der auf Bandmitte abgeglichenen Resonanzkreise in den Zuführungsnetzwerken 6a und 6d nahezu unbelastet.

Durch Variation der Belastung der anderen Teilsammelschiene (im Beispiel die Teilsammelschiene 4d) von Leerlauf über induktive Belastung, Kurzschluß, kapazitive Belastung und Leerlauf in ca. 6 bis 8 Schritten und jeweils der Erfassung der Diversityeignung mit den aufgeführten Meßsystemen für jeweils eine Frequenz am unteren Bandende, in der Mitte und am oberen Bandende des UKW-Bereichs ist dann die optimale Beschaltung zu ermitteln.

Sollten die Ergebnisse unbefriedigend sein, ist die Beschaltung der einen Sammelschiene (Sammelschiene 4b im Beispiel der Fig.7) z.B. in Leerlauf abzuändern und die Messungen bei Variation der Belastung der Sammelschiene 4d zu wiederholen. Als Richtwert für Diversityantennen ist heranzuziehen, daß die Störzeiten, die mit einer der beiden Einzelantennen vorhanden sind, durch das Diversitysystem auf ca. 1/5 bis zu ca. 1/20 reduziert sein sollten.

Diese Vorgehensweise führt in manchen Fahrzeugen auch zu einer guten Impedanzentkopplung zwischen den Anschlußpunkten 5a und 5b mit dem Vorteil eines einfachen Abgleichs der weiterführenden Netzwerke, da die Abhängigkeit der Quellimpedanz z.B. an der Anschlußstelle 5a von der Beschaltung an der Anschlußstelle 5b nahezu unabhängig ist.

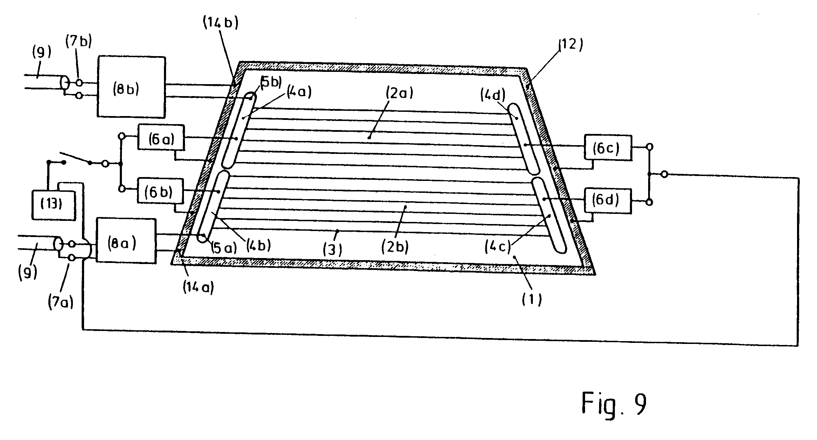

Diese Impedanzverkopplung hat mehrere Ursachen: zum einen besteht eine kapazitive Verkopplung der beiden Teilheizfelder, zum anderen besteht auf Grund der gemeinsamen Anordnung beider Antennenstrukturen in einer gemeinsamen Scheibenöffnung eine Verkopplung über STröme und Spannungen in dem die Heckscheibe umschließenden metallischen Rahmen der Fahrzeugkarosserie. Wird das Heizfeld nicht in zwei Teilheizfelder unterteilt (Fig.9), so kommt noch eine galvanische Verkopplung auf Grund der durchgehenden Sammelschienen hinzu.

Eine derartige gute Impedanzentkopplung ist jedoch grundsätzlich nicht erforderlich, da es bekanntlich immer möglich ist, eine passiven Vierpol beidseitig anzupassen. Hierzu ist eine mathematische Analyse der kompletten Vierpolmatrix durchzuführen, wobei die Klemmenpaare des Vierpols durch die Anschlußklemmenpaare der beiden Diversityantennen, also die Anschlußpunkte 5a und 5b zusammen mit den gegenüberliegenden Massepunkten, gebildet sind.

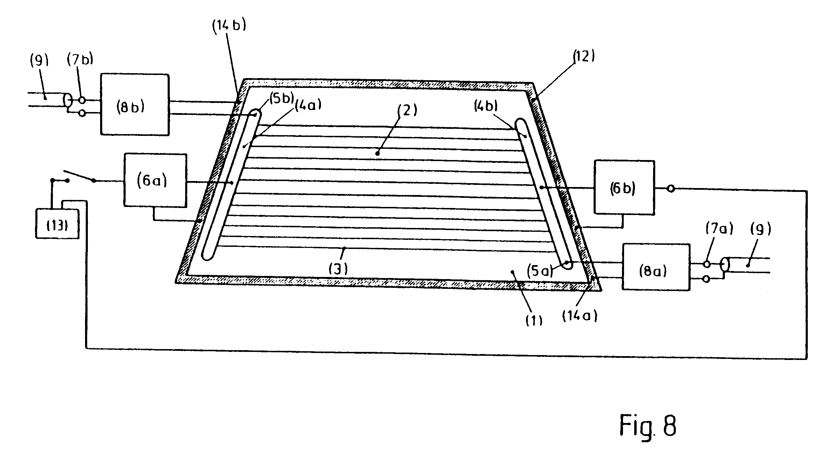

Fig.8 zeigt eine weitere Ausführungsform von Antennen nach der Erfindung, bei der, wie in Fig.1, die Anschlußpunkte 5a und 5b an diagonal entgegengesetzten Enden der Sammelschienen angebracht sind, jedoch auf eine Unterteilung des Heizfeldes verzichtet wurde. Bei einer derartigen Anordnung, die den Vorteil einer insgesamt minimalen Beschaltung der Scheibe besitzt, besteht allerdings nur eine geringe Möglichkeit, die Unterschiedlichkeit des Verhaltens der beiden Antennen bezüglich der Empfangseinbrüche durch die Zuführungsnetzwerke 6a und 6b zu beeinflussen. Dementsprechend gibt diese Ausführungsform im wesentlichen in solchen Fällen die erforderlichen guten Ergebnisse, in denen die optimale Beschaltung durch die Netzwerke 6a und 6b in hochohmigen Beschaltungen besteht, wie sie bei dieser Anordnung ohne Einbuße an Empfangsleistung der Einzelantennen erforderlich ist. entsprechend der galvanischen Verkopplung zwischen den Anschlußpunkten ist in der Regel die impedanzmäßige Entkopplung gering.

Fig.9 zeigt eine Anordnung von Antennen nach der Erfindung, die den Vorteil bietet, wegen der Montage der weiterführenden Netzwerke 8a und 8b auf der gleichen Seite der Scheibe eine günstigere Kabelführung von den weiterführenden Netzwerken zur Diversity-Einheit zu ermöglichen. Ein ausreichend unterschiedliches Verhalten bezüglich der Empfangseinbrüche bezüglich der Anschlußpunkte (5a) und (5b) erfordert in der Regel eine Aufteilung des Heizfeldes in zwei Teilheizfelder. Trotz der geringeren räumlichen Entfernung der Anschlußpunkte 5a und 5b im Vergleich zu Fig.1 sind in der Regel gleichwertige Ergebnisse erreichbar. Gutes Diversityverhalten erfordert meist eine von Charakter her unterschiedliche Beschaltung der Sammelschienen 4c und 4d durch die Zuführungsnetzwerke 6c und 6d. Eine Optimierung entsprechend der Erfindung zeigt in der Regel, daß die eine der Impedanzen vergleichsweise niederohmig und die andere vergleichsweise hochohmig sein muß.

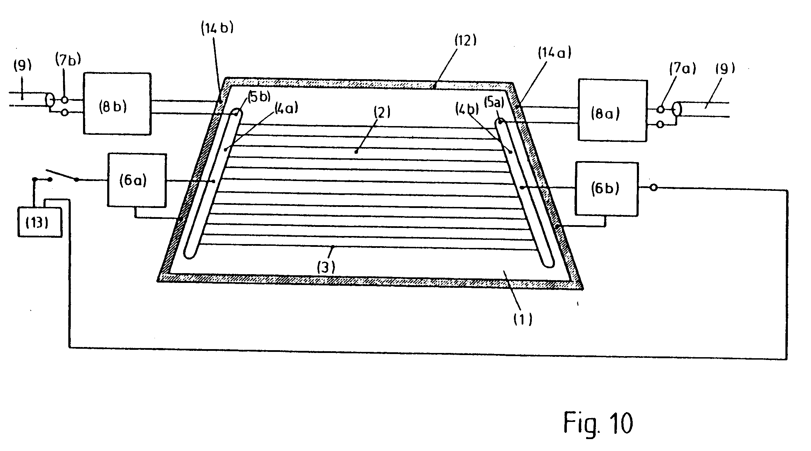

In Fig.10 sind die Anschlußpunkte (5a) und (5b) bei ungeteiltem Heizfeld auf verschiedenen Sammelschienen entweder an den oberen oder an den unteren Enden der Sammelschienen angebracht. Dies bringt bei manchen Fahrzeugtypen, z.B. bei Typen mit einer oben angelenkten den Vorteil einer besonders einfachen Kabelführung mit sich. Bezüglich der Eignung für Diversityanwendung und speziell bezüglich der Ausführungsmöglichkeiten der Zuführungsnetzwerke 6a und 6b gilt das oben zu Fig.8 erläuterte.

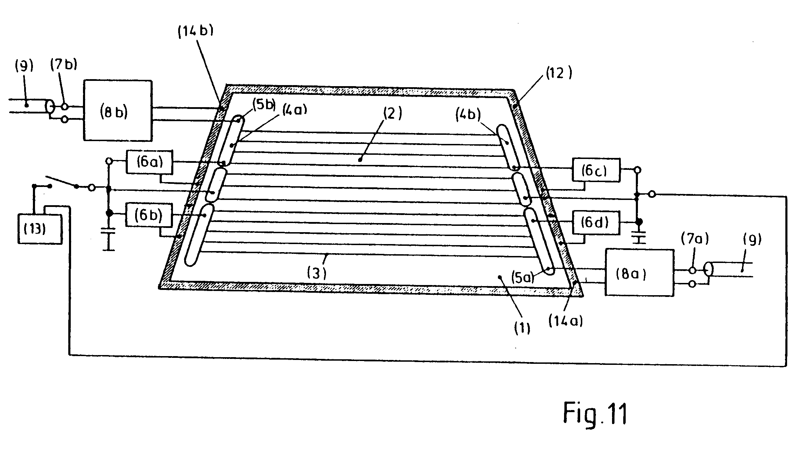

In Fig.11 ist eine weitere Ausführungsform von Antennen nach der Erfindung dargestellt. Das Heizfeld ist dreifach unterteilt, wobei das mittlere, vorzugsweise schmälere Teilheizfeld nicht als Antennenstruktur verwendet wird, sondern kapazitiv auf Masse geschaltet wird, um die kapazitive Verkopplung zwischen den beiden als Antennenstrukturen verwendeten Teilheizfelder zu reduzieren.

Diese Maßnahme ist in der Regel von untergeordneter Bedeutung, was die Unterschiedlichkeit bezüglich der Empfangseinbrüche angeht, verbessert jedoch die Impedanzentkopplung zwischen den Anschlußpunkten 5a und 5b, wodurch der Abgleich der weiterführenden Netzwerke vereinfacht ist. Dies gilt in gleicher Weise für diagonal entgegengesetzte Anschlußpunkte wie für Anschlußpunkte auf der gleichen Seite der Scheibe.

Bekanntlich steigt die Wirksamkeit von Antennendiversityanlagen mit der Zahl der verwendeten Antennen deutlich an, wenn sich die einzelnen Antennen bezüglich der Empfangseinbrüche hinreichend unterschiedlich verhalten. Die Realisierung von z.B. vier Antennen entsprechend der Erfindung in einer einzigen Fahrzeugheckscheibe ist daher sinnvoll.

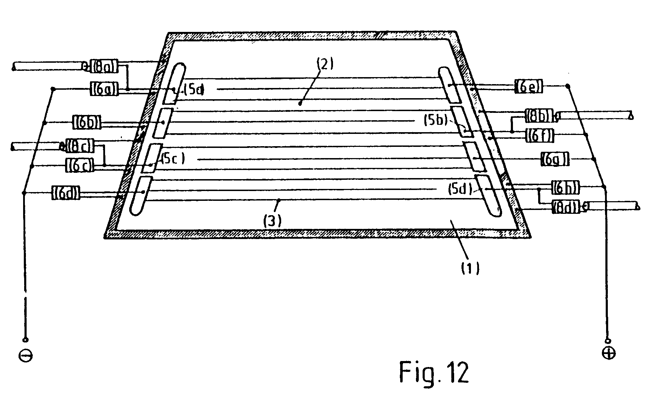

Eine entsprechende vorteilhafte weitere Ausgestaltung der Erfindung mit vier Diversityantennen Fig.12, in der das Heizfeld in vier Teilheizfelder unterteilt ist, wodurch acht Teilsammelschienen entstehen, und die Anschlußpunkte 5a bis 5d jeweils abwechselnd rechts und links der Scheibe angebracht sind. Die vier Zuführungsnetzwerke 6b, 6d, 6e und 6g auf den den Anschlußpunkten 5a bis 5d entgegengesetzen Teilsammelschienen 4b, 4d, 4e und 4g können hinsichtlich ihrer Belastungsimpedanz geeignet auf Grund der beschriebenen Messfahrten festgelegt werden, während die Belastungsimpedanzen der Zuführungsnetzwerke 6a, 6c, 6f und 6h in der Regel hochohmig aus den oben bei Fig.1 beschriebenen Gründen zu wählen sind.

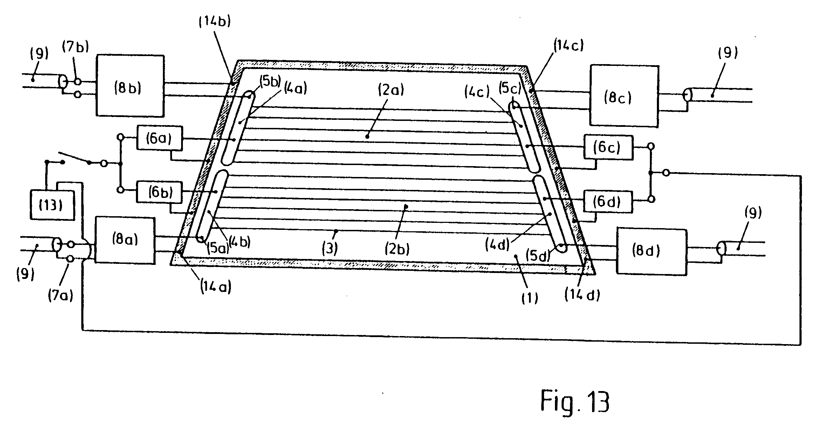

Eine weitere mögliche Anordnung hierfür zeigt Fig.13, bei der das Heizfeld horizontal einfach unterteilt ist und an jedem der beiden Teilheizfelder an den Sammelschienen jeweils zwei Anschlußpunkte (5) angebracht sind. Eine derartige Ausführung setzt für ein ausreichend unterschiedliches Verhalten der Einzelantennen hinsichtlich der Empfangseinbrüche eine ausreichend große Heckscheibe voraus, wie sie in der Regel bei Fahrzeugen mit einer großen Heckklappe anzutreffen ist, bei denen die Teilheizfelder in der Abmessung senkrecht zu den Heizdrähten ausreichend groß sind, so daß wenigstens eine gewisse Optimierung mit Hilfe der Netzwerke (6) erfolgen kann. Wegen der relativ geringen Möglichkeiten hierzu kommt diese im Vergleich zu Fig.12 speziellere Anordnung im wesentlichen dann in Frage, wenn die Geometrie der Heckscheibe und des Heizfeldes derart ist, daß die optimalen Beschaltungsimpedanzen hochohmige Impedanzen sind. In derartigen Fällen ergibt sich denn allerdings ein äußerst einfacher Aufbau für die vier Diversityantennen.

Für den Empfang der Wellenbereiche des Lang-, Mittel- und Kurzwellenbereichs ist wegen der großen Wellenlängen nur eine einzige Antenne erforderlich. Diese kann z.B. durch eine vom Heizfeld unabhängige Struktur oberhalb oder unterhalb des Heizfeldes mit dem entsprechenden eingangsseitig hochohmigen Antennenverstärker nach dem Stand der Technik aufgebaut werden. Ebenfalls nach dem Stand der Technik kommt eine transformatorische Ankopplung an eines der Teilheizfelder in Betracht.

**Patentansprüche**

1. Diversityantennen-Anordnung für ein bewegliches Fahrzeug, z.B. ein Kraftfahrzeug, mit mindestens zwei Diversityantennen und mit einem im Bereich einer Scheibe, z.B. einer PKW-Heckscheibe, angeordneten Heizfeld mit stirnseitig angeordneten Sammelschienen zur Zuführung des Heizstroms und mit zwischen diesen angeordneten zu heizenden Leiterteilen, dadurch gekennzeichnet, daß mindestens zwei der Diversityantennen aus dem Heizfeld gebildet sind, daß jede dieser Diversityantennen derartige stirnseitig angeordnete Sammelschienen (4a, 4d; 4b, 4c) und zwischen diesen angeordnete zu heizende Leiterteile (2a, 2b) und ein Klemmenpaar aufweist, das mit einem Anschlußnetzwerk (8a, 8b) der aus dem Heizfeld gebildeten Diversityantenne verbunden ist, daß jedes Klemmenpaar einen Masseanschlußpunkt (14a, 14b) und einen Leiterteil-Anschlußpunkt (5a, 5b) aufweist, daß die Leiterteil-Anschlußpunkte (5a, 5b) aller aus dem Heizfeld gebildeten Diversityantennen derart angeordnet sind, daß sie HF-mäßig weitgehend voneinander entkoppelt sind, und daß in den Heizstromzuführungsleitungen HF-Leistung sperrende Zuführungsnetzwerke (6a-d) vorgesehen sind.

2. Diversityantennen-Anordnung nach Anspruch 1, dadurch gekennzeichnet, daß die aus dem Heizfeld gebildeten Diversityantennen deren Heizstrom über nahezu senkrecht angeordnete Sammelschienen (4a-d) zugeführt ist, und auf den Sammelschienen (4a-d) an unterschiedlichen Stellen mindestens zwei Anschlußpunkte (5a, b) gewählt sind, die zusammen mit zu diesen (5a, b) benachbarten Massepunkten (14a, b) auf dem Fensterrahmen (12) Anschlußklemmenpaare (5a, 14a, 5b, 14b) bilden und an diese Anschlußklemmenpaare jeweils ein Anschlußnetzwerk (8a, b) mit Transformations- und/oder Verstärkereigenschaften angeschlossen ist, dessen Ausgang jeweils die Antennenanschlußstelle (7a, b) einer der Diversityantennen bildet, und in den Gleichstromzuführungen zu den Sammelschienen (4a-d) Zuführungsnetzwerk (6a-d) vorhanden sind, die für den Heiz- Gleichstrom durchlässig sind und die zwischen der jeweiligen Sammelschiene (4a-d) und Masse (12) eine verlustarme hochfrequenzmäßige Impedanz bilden.

3. Diversityantennen-Anordnung nach Anspruch 1 oder 2, dadurch gekennzeichnet, daß die Anschlußpunkte (5a, b) und die hochfrequenzmäßigen Impedanzen der Zuführungsnetzwerke (6a-d) in den Gleichstromzuführungen zu den Sammelschienen (4a-d) geeignet gewählt sind derart, daß die Anzahl der an allen Antennenanschlußstellen (7a, b) während der Fahrt gleichzeitig auftretenden Einbrüche der Empfangspegel möglichst klein ist.

4. Diversityantennen-Anordnung nach einem der Ansprüche 1-3, dadurch gekennzeichnet, daß die Heizleiterstruktur horizontal in etwa zwei flächengleiche Hälften unterteilt ist und auf den beiden für den Nutzfrequenzbereich bezüglich der Gleichstromzuführungen voneinander isolierten Teilheizfeldern (2a und 2b) zwei Anschlußpunkte (5a und 5b) vorhanden sind, die jeweils am Ende der jeweiligen Sammelschiene (4c, 4a) und untereinander diagonal entgegengesetzt angebracht sind.

5. Diversityantennen-Anordnung nach einem der Ansprüche 1-3, dadurch gekennzeichnet, daß die Heizleiterstruktur horizontal unterteilt ist und auf den beiden für den Nutzfrequenzbereich zumindest auf der Seite der Anschlußpunkte bezüglich der Gleichstromzuführungen voneinander isolierten Teilheizfeldern (2a und 2b) zwei Anschlußpunkte (5a und 5b) vorhanden sind, die jeweils am Ende der jeweiligen Sammelschiene (4b, 4a) und auf der gleichen Seite des Heizfeldes (2) angebracht sind.

6. Diversityantennen-Anordnung nach einem der Ansprüche 1-3, **dadurch gekennzeichnet,** daß das Heizfeld (2) ungeteilt ist und zwei Anschlußpunkte (5a und 5b) vorhanden sind, die jeweils am Ende der jeweiligen Sammelschiene (4b, 4a) und untereinander diagonal entgegengesetzt angebracht sind.

7. Diversityantennen-Anordnung nach einem der Ansprüche 1-3, **dadurch gekennzeichnet,** daß das Heizfeld (2) ungeteilt ist und zwei Anschlußpunkte (5a und 5b) vorhanden sind, die jeweils am Ende der jeweiligen Sammelschiene (4b, 4a) und beide entweder am oberen Ende des Heizfeldes (2) oder beide am unteren Ende des Heizfeldes angebracht sind.

8. Diversityantennen-Anordnung nach einem der Ansprüche 1-3, **dadurch gekennzeichnet,** daß das Heizfeld (2) horizontal in drei Teilheizflächen unterteilt ist und an den beiden außen liegenden Teilheizfeldern jeweils ein Anschlußpunkt (5a, b) angebracht ist und die vertikale Abmessung des mittleren Teilheizfeldes vorzugsweise etwas kleiner gewählt ist und dieses Teilheizfeld für Frequenzen des Nutzfrequenzbereichs geeignet beschaltet ist.

9. Diversityantennen-Anordnung nach einem der Ansprüche 1-3, **dadurch gekennzeichnet,** daß auf jeder Seite der beiden Teilheizfelder (2a, 2b) zwei, also insgesamt vier Anschlußpunkte (5a bis 5d) vorhanden sind, die jeweils am äußeren Ende der jeweiligen Sammelschiene (4a-d) angebracht sind.

10. Diversityantennen-Anordnung nach einem der Ansprüche 1-3, **dadurch gekennzeichnet,** daß das Heizfeld (2) horizontal in vier ungefähr gleich große Teilheizfelder (2a-d) unterteilt ist und die Teilheizfelder (2a-d) für den Nutzfrequenzbereich bezüglich der Gleichstromzuführungen voneinander isoliert sind und an jedem der vier Teilheizfelder (2a-d) ein Anschlußpunkt (5a-d) vorhanden ist.

11. Diversityantennen-Anordnung nach einem der Ansprüche 1-10 **dadurch gekennzeichnet,** daß die Zuführungsnetzwerke (6a, d) in den Gleichstromzuführungen zu den Sammelschienen (4a, 4c), an denen die Anschlußpunkte (5b, 5a) angebracht sind, innerhalb des Nutzfrequenzbereichs jeweils eine hochfrequenzmäßige hochohmige und verlustarme Impedanz besitzen.

12. Diversityantennen-Anordnung nach einem der Ansprüche 1-11, **dadurch gekennzeichnet,** daß wenigstens eins der Zuführungsnetzwerke (6b, 6c) in den Gleichstromzuführungen zu den Sammelschienen (4b, 4d), an denen die Anschlußpunkte nicht angebracht sind, innerhalb des Nutzfrequenzbereichs jeweils eine hochfrequenzmäßige hochohmige und verlustarme Impedanz besitzen.

13. Diversityantennen-Anordnung nach einem der Ansprüche 11 oder 12, **dadurch gekennzeichnet,** daß die hochfrequenzmäßige hochohmige Impedanz des jeweiligen Zuführungsnetzwerks (6a-d) durch eine Schaltung vom Charakter eines Parallelresonanzkreises (18, 19) realisiert ist, dessen Resonanzfrequenz innerhalb des Nutzfrequenz-bereichs liegt.

14. Diversityantennen-Anordnung nach einem der Ansprüche 1-10, **dadurch gekennzeichnet,** daß wenigstens eins der Zuführungsnetzwerke (6b, c) in den Gleichstromzuführungen zu den Sammelschienen (4b, d), an denen die Anschlußpunkte nicht angebracht sind, innerhalb des Nutzfrequenzbereichs eine hochfrequenzmäßig niederohmige und verlustarme Impedanz besitzt.

15. Diversityantennen-Anordnung nach Anspruch 14, **dadurch gekennzeichnet,** daß die hochfrequenzmäßig niederohmige und verlustarme Impedanz durch einen geeigneten Kondensator (20) realisiert ist, der von der der jeweiligen Sammelschiene (4b, 4d) abgewandten Seite des Resonanzkreises (18, 19) nach Masse (12) geschaltet ist.

16. Diversityantennen-Anordnung nach einem der Ansprüche 12-15, **dadurch gekennzeichnet,** daß wenigstens eins der Zuführungsnetzwerke (6b, 6c) in den Gleichstromzuführungen zu den Sammelschienen (4b, 4d), an denen die Anschlußpunkte nicht angebracht sind, innerhalb des Nutzfrequenzbereichs eine kapazitive oder induktive verlustarme Impedanz besitzt.

17. Diversityantennen-Anordnung nach einem der Ansprüche 1-16, **dadurch gekennzeichnet,** daß bei aktiven Netzwerken die Eingangsimpedanzen der Anschlußnetzwerke (8a, b) so gewählt sind, daß sie möglichst wenig HF-Leistung an den Anschlußklemmenpaaren (5a, 14a; 5b, 14b) aufnehmen.

18. Diversityantennen-Anordnung nach Anspruch 17,
**dadurch gekennzeichnet,** daß die aktiven Netzwerke (8a, b) am Eingang hochohmig sind im Vergleich zu der an dem Klemmenpaar (5a, 14a; 5b, 14b) meßbaren Impedanz.

19. Diversityantennen-Anordnung nach Anspruch 18,
**dadurch gekennzeichnet,** daß die aktiven Netzwerke (8a,b) eingangsseitig ein kapazitiv hochohmiges Verstärkerelement, vorzugsweise einen Feldeffekttransistor, aufweisen.

20. Diversityantennen-Anordnung nach einem der Ansprüche 1-19
**dadurch gekennzeichnet,** daß die zu heizenden Leiterteile (2a, 2b) als Einzelleiter (3) ausgebildet sind.

21. Diversityantennen-Anordnung nach einem der Ansprüche 1-19,
**dadurch gekennzeichnet,** daß die zu heizenden Leiterteile (2a, 2b) aus einer Widerstandsschicht bestehen.

## Claims

1. Diversity antenna arrangement for a vehicle, for example a motor car, consisting of at least two diversity antennas and a demister grid on the rear screen of a motor car having bus bars at two sides to carry the healing power and healing wires in between, characterized by the fact that at least two diversity antennas are part of the heating grid. Each of these has bus bars (4a, 4d, 4b, 4c) at either end, and between the bus bars are wires (2a, 2b) making up the heater grid. Each antenna has a pair of clamp terminals hooked to a coupling network (8a, 8b) pertaining to the diversity antennas derived from the heater grid. Each pair of clamp terminals has a grounding terminal (14a, 14b) and an aerial terminal (5a, 5b). The aerial terminals of all diversity antennas derived from the heater grid are arranged in such a way that they are to a very large extent isolated from each other with respect to their radio frequency. The bus bars, in turn, are provided with rejecting filter networks to eliminate any radio frequency.

2. Diversity antenna arrangement as per claim 1, characterized by the fact that the heating power comes to the diversity antennas derived from the heater grid over near vertical bus bars (4a-d). The bus bars (4a-d) have at least two terminals (5a, b) at different points which together with grounding points (14a, b) on the window frame (12) constitute pairs of clamp terminals (5a, 14a, 5b, 14b) each hooked to a coupling network (8a, b) acting as a transformer and/or amplifier each of whose output constituting the antenna terminal (7a, b) of one diversity antenna. The DC power leads to the bus bars (4a-d) integrate supply networks (6a-d) which let pass the DC power and form a low-loss RF impedance with respect to the grounding point (12).

3. Diversity antenna arrangement as per claim 1 or 2, characterized by the fact that the terminal points (5a, b) and the RF impedances of the supply networks (6a-d) in the DC power leads to the bus bars (4a-d) are configured in such a way that the number of blot-outs of the receive signal during the ride is as small as possible.

4. Antenna diversity arrangement as per one of claims 1 to 3, characterized by the fact that the heater grid divides horizontally in two about equal halves (2a, 2b) both of which are isolated from each other with respect to the desired radio frequency range, each one being provided with feed points (5a, 5b) located at diagonally opposite ends of the bus bars (4c, 4a).

5. Antenna diversity arrangement as per one of claims 1 to 3, characterized by the fact that the heater grid horizontally divides into two halves each of which is provided with its feed point (5a, 5b), those heater grid sections (2a, 2b) being isolated for the desired frequency range with respect to the DC power leads at least in the area of the feed points each located at the ends of the respective bus bars (4b, 4a) both on the same side of the heater grid (2).

6. Antenna diversity arrangement as per one of claims 1 to 3, characterized by the fact that the heater grid (2) is undivided. It has two feed points (5a, 5b) located in diagonal from each other each at the end of a bus bar (4b, 4a).

7. Antenna diversity arrangement as per one of claims 1 to 3, characterized by the fact that the heater grid is undivided. It has two feed points (5a, 5b) located each at the end of a bus bar (4b, 4a) and both of them either at the top end of the heater grid or at its bottom end.

8. Antenna diversity arrangement as per one of claims 1 to 3, characterized by the fact that the heater grid (2) divides horizontally into three sub-grids. The top and bottom sub-grids have each a feed point (5a, 5b) and the vertical dimension of the sub-grid in the middle is slightly smaller than for the other two, the middle section being arranged appropriately for the wanted frequency band.

9. Antenna diversity arrangement as per one of claims 1 to 3, characterized by the fact that on either side of both sub-grids (2a, 2b) are two totalling four feed points (5a to d) each located at the outer end of a bus bar (4a to d).

10. Antenna diversity arrangement as per one of claims 1 to 3, characterized by the fact that the heater grid subdivides into four sub-grids of about equal size (2a to d) being isolated from each other and from the DC power leads with respect to the wanted frequency band and being provided each with a feed point (5a to d).

11. Antenna diversity arrangement as per one of claims 1 to 10, characterized by the fact that the supply networks (6a, d) in the DC power leads to the bus bars (4a, 4c) with the feed points (5b, 5a) each provide a low-loss high-ohmage RF impedance.

12. Antenna diversity arrangement as per one of claims 1 to 11, characterized by the fact that at least one of the supply networks (6b, 6c) in the DC power leads to the bus bars (4b, 4d) with no feed points each have a low-loss high-ohmage RF impedance effective in the wanted frequency band.

13. Antenna diversity arrangement as per one of claims 11 or 12, characterized by the fact that the high-ohmage RF impedances in the supply networks (6a to d) in the DC power leads are implemented by parallel resonance circuits (18, 19) whose resonance frequency falls inside the wanted frequency band.

14. Antenna diversity arrangement as per one of claims 1 to 10, characterized by the fact that at least one of the supply networks (6b, c) in the DC power leads to the bus bars (4b, d) with no feed points provides a low-ohmage low-loss RF impedance.

15. Diversity antenna arrangement as per claim 14, characterized by the fact that the low-ohmage low-loss RF impedance is implemented by an appropriate capacitor (20) shunted to ground (12) on the side of the resonance circuit (18, 19) turning away from the bus bar (4b, 4d).

16. Antenna diversity arrangement as per one of claims 12 to 15, characterized by the fact that at least one of the supply networks (6b, 6c) in the DC power leads to the bus bars (4b, 4c) with no feed points provides a capacitive or inductive low-loss RF impedance effective in the wanted frequency band.

17. Antenna diversity arrangement as per one of claims 1 to 16, characterized by the fact that for active circuits the input impedance rates of the coupling networks (8a, 8b) are selected in such a way as to pick up the smallest possible amount of RF energy at the terminal pairs (5a, 14a; 5b, 14b).

18. Diversity antenna arrangement as per claim 17, characterized by the fact that the inputs of the active networks (8a, 8b) referred to the impedance measured on the terminal pairs (5a, 14a; 5b, 14b) are high-ohmage.

19. Diversity antenna arrangement as per claim 18, characterized by the fact that the inputs of the active networks (8a, 8b) provide a capacitive high-ohmage amplifier element, preferably a FET.

20. Antenna diversity arrangement as per one of claims 1 to 19, characterized by the fact that the heating conductors (2a, 2b) are solid wires.

21. Antenna diversity arrangement as per one of claims 1 to 19, characterized by the fact that the heating conductors (2a, 2b) are designed as a resistive layer.

**Revendications**

1. Configuration d'antennes diversité pour un véhicule, par exemple une automobile, constituée au moins par deux antennes diversité et un panneau de chauffage disposé sur la glace arrière d'une voiture ayant des barres collectrice latérales portant l'énergie de chauffage et des fils de chauffage (2a, 2b) s'étendant entre les barres collectrices, caractérisée du fait qu'au moins deux de ces antennes diversité sont des parties intégrantes du panneau de chauffage, chaqu'une d'elles aboutissant sur les barres collectrices (4a, 4d; 4b, 4c). Entre les barres collectrices sont disposés les fils (2a, 2b) formant le panneau de chauffage. Chaqu'une de ces antennes et munie d'une paire de bornes terminales reliées à un réseau de couplage (8a, 8b) faisant partie des antennes diversité dérivées du panneau de chauffage. Chaqu'une des paires de bornes est constituée par une borne de mise à terre (14a, 14b) et une borne d'antenne (5a, 5b). Les bornes d'antenne (5a, 5b) de toutes les antennes diversité dérivées du panneau de chauffage sont disposées de telle manière qu'elle sont isolées entre elles d'un haut degré d'affaiblissement point de vue HF. Les barres collectrices de leur côté sont munies de filtres de réjection afin de supprimer l'énergie HF.

2. Configuration d'antennes diversité selon la revendication No. 1, caractérisée du fait que l'énergie de chauffage est alimentée aux antennes diversité dérivées du panneau de chauffage à travers de barres collectrices (4a - d) disposées de façon quasi verticale. Les barres collectrices (4a - d) sont munies au moins de deux bornes (5a, b) placées sur points différents lesquelles, coopérant avec des bornes de mise à terre (14a, b) localisées sur le cadre de la glace, constituent les paires de bornes terminales (5a, 14a, 5b, 14b) dont chaqu'une reliée à un réseau de couplage (8a, b) agissant comme transformateur et/ou amplificateur leurs sorties faisant chaqu'une les bornes terminales (7a, b) de l'une des antennes diversité. Les lignes de puissance CC aux barres collectrices (4a - d) comprennent des réseaux d'alimentation (6a - d) laissant passer l'énergie de CC constituant en même temps une impédance HF à faible perte vers le point de mise à terre (12).

3. Configuration d'antennes diversité selon la revendication No. 1 ou 2, caractérisée du fait que les bornes terminales (5a, b) coopérant avec les impédances des réseaux d'alimentation (6a - d) compris dans le lignes de puissance CC aux barres collectrices (4a - d) sont constituées de telle manière que le nombre de coupures de la captation radiophonique registrées pendant la circulation sur les bornes terminales de l'antenne (7a, 7b) soit le plus réduit possible.

4. Configuration d'antennes diversité selon l'une des revendications No. 1 à 3, caractérisée du fait que le panneau de chauffage est divisé de façon horizontale en deux parties (2a et 2b) des mêmes mesures environ, toutes les deux découplées l'une de l'autre en rapport à la bande de fréquences désirée, chaqu'une de ces partie étant munie d'une borne d'alimentation (5a, 5b) lesquelles placées sur des extrémités des barres collectrices (4c, 4a) opposés en diagonale.

5. Configuration d'antennes diversité selon l'une des revendications No. 1 à 3, caractérisée du fait que le panneau de chauffage est divisé de façon horizontale en deux partie (2a et 2b) dont chaqu'une munie de sa borne terminale (5a, 5b), les deux sections étant découplées en rapport à la bande utile des lignes de puissance CC au moins en ce qui concerne l'espace en proximité des bornes terminales placée chaqu'une à l'extrémité de sa barre collectrice (4b, 4a), mais toutes les deux au même côté du panneau de chauffage (2).

6. Configuration d'antennes diversité selon l'une des revendications No. 1 à 3, caractérisée du fait que le panneau de chauffage (2) n'est pas divisé. Il est muni de deux bornes d'alimentation (5a, 5b) localisées en diagonale l'une de l'autre, chaqu'une à l'extrémité d'une barre collectrice (4b, 4a).

7. Configuration d'antennes diversité selon l'une des revendications No. 1 à 3, caractérisée du fait que le panneau de chauffage n'est pas divisé. Il est muni de deux bornes d'alimentation (5a, 5b) chaqu'une d'elles placée sur l'extrémité d'une barre collectrice (4b, 4a) et toutes les deux ou en haut ou en bas du panneau de chauffage (2).

8. Configuration d'antennes diversité selon l'une des revendications No. 1 à 3, caractérisée du fait que le panneau de chauffage (2) est divisé de façon horizontale en trois sections dont la supérieure et l'inférieure munies d'une borne d'alimentation (5a, 5b), la dimension verticale de la section intermédiaire étant un peu plus courte que celle des autres deux cette section au milieu étant configurée de manière appropriée pour la captation de la bande utile.

9. Configuration d'antennes diversité selon l'une des revendications No. 1 à 3, caractérisée du fait qu'à chaque côté des deux sections du panneau de chauffage (2a, 2b) sont disposées deux faisant un total de quatre bornes d'alimentation (5a - 5d) dont chaqu'une située sur l'une des extrémités extérieures des barres collectrices (4a - d).

10. Configuration d'antennes diversité selon l'une des revendications No. 1 à 3, caractérisée du fait que le panneau de chauffage (2) est divisé en quatre sections (2a - d) de dimensions plus ou moins égales découplées entre elles et des lignes de puissance CC par rapport à la bande utile, chaqu'une d'elles munie d'une borne d'alimentation (5a - d).

11. Configuration d'antennes diversité selon l'une des revendications No. 1 à 10, caractérisée du fait que les réseaux d'alimentation (6a, d) dans les lignes de puissance CC vers les barres collectrices (4a, 4c) portant les bornes d'alimentation (5b, 5a) sont pourvus chacun d'une impédance HF de faible perte et haute valeur ohmique.

12. Configuration d'antennes diversité selon l'une des revendications No. 1 à 11, caractérisée du fait qu'au moins l'un des réseaux d'alimentation (6b, 6c) dans les lignes de puissance CC vers les barres collectrices (4b, 4d) ne pas pourvues de bornes d'alimentation sont munis chacun d'une impédance HF de faible perte et haute valeur ohmique par rapport à la bande utile.

13. Configuration d'antennes diversité selon l'une des revendications No. 11 ou 12, caractérisée du fait que les impédances HF de haute valeur ohmique des réseaux d'alimentation (6a - d) dans les lignes de puissance CC sont constituées par des circuits résonants en parallèle (18, 19) dont la fréquence résonante est comprise dans la bande utile.

14. Configuration d'antennes diversité selon l'une des revendications No. 1 à 10, caractérisée du fait qu'au moins l'un des réseaux d'alimentation (6b, 6c) dans les lignes de puissance CC vers les barres collectrices (4b, d) ne pas pourvues de bornes d'alimentation est muni d'une impédance HF de basse valeur ohmique et faible perte.

15. Configuration d'antennes diversité selon la revendication No. 14, caractérisée du fait que l'impédance de basse valeur ohmique et faible perte est constituée par un condensateur approprié (20) relié à la terre (12) localisé au côté opposé à la barre collectrice (4b, 4d) du circuit résonant (18, 19).

16. Configuration d'antennes diversité selon l'une des revendications No. 12 à 15, caractérisée du fait qu'au moins l'un des réseaux d'alimentation (6b, 6c) dans les lignes de puissance CC vers les barres collectrices (4b, 4d) ne pas pourvu de borne d'alimentation fournit une impédance HF dans la bande utile de faible perte réalisée de manière inductive ou capacitive.

17. Configuration d'antennes diversité selon l'une des revendications No. 1 à 16, caractérisée du fait que pour des circuits amplificateurs les impédances d'entrée aux réseaux de couplage (8a, b) sont choisies d'une manière appropriée à n'absorber qu'un minimum d'énergie HF aux paires de bornes d'alimentation (5a, 14a; 5b, 14b).

18. Configuration d'antennes diversité selon la revendication No. 17, caractérisée du fait que les entrées des réseaux amplificateurs (8a, 8b) - prenant comme référence l'impédance mesurée aux paires de bornes (5a, 14a; 5b, 14b) sont d'une haute valeur ohmique.

19. Configuration d'antennes diversité selon la revendication No. 18, caractérisée du fait que les entrées des réseaux actifs (8a, 8b) présentent un élément amplificateur de haute valeur ohmique, en préférence un transistor à effet de champ.

20. Configuration d'antennes diversité selon l'une des revendications No. 1 à 19, caractérisée du fait que les conducteurs de chauffage (2a, 2b) sont des fils métalliques (3).

21. Configuration d'antennes diversité selon l'une des revendications No. 1 à 19, caractérisée du fait que les conducteurs de chauffage (2a, 2b) sont constitués par des couches résistantes.

Fig.1

EP 0 269 723 B1

Fig. 2

Fig. 3

Ortsabhängigkeit
von:

Antennen-
Ausgangsspannungen

Störungen mit
Antenne 1: Störzeit: ca. 6%

Störungen mit
Antenne 2: Störzeit: ca. 6%

Diversity:
keine Störung

Fig 4

16

Fig.5

Fig. 6

kapazitiv hochohmig

A ○—— (6c) [C≪] ——○ B

kapazitiv niederohm

A ○—— (6c) ——○ B

Kurzschluss

A ○—— (6c) ——○ B

induktiv niederohmig

A ○—— (6c) ——○ B

induktiv hochohmig

A ○—— (6c) ——○ B

Annäherung an Leerl.

A ○—— (6c) ——○ B

(8a)

(6a)

(6b)

⊖

A

B

(6d)

⊕

(8b)

(1)

Fig. 7

Fig. 8

Fig. 9

Fig. 10

Fig.11

Fig. 12

Fig. 13